# EUROPEAN PATENT SPECIFICATION

(11) **EP 2 922 226 B1**
(45) Date of publication and mention of the grant of the patent: **26.10.2016**
(21) Application number: 14305398.1
(22) Date of filing: 20.03.2014
(51) Int. Cl.: H04J 14/02, H04Q 11/00

(54) **METHOD FOR MEASURING A PACKET DELAY IN AN OPTICAL NODE OF A SYNCHRONOUS NETWORK**
VERFAHREN ZUR MESSUNG EINER PAKETVERZÖGERUNG IN EINEM OPTISCHEN KNOTEN EINES SYNCHRONEN NETZWERKS
PROCÉDÉ POUR MESURER UN RETARD DE PAQUET DANS UN NOEUD OPTIQUE D'UN RÉSEAU SYNCHRONE

(43) Date of publication of application: 23.09.2015
(73) Proprietor: ALCATEL LUCENT, 92100 Boulogne-Billancourt (FR)
(72) Inventor: Chiaroni, Dominique, 91620 Nozay (FR); Dupas, Arnaud, 91620 Nozay (FR)
(74) Representative: Berthier, Karine

(56) References cited:
- YUANG M ET AL: "HOPSMAN: An Experimental Testbed System for a 10-Gb/s Optical Packet-Switched WDM Metro Ring Network", IEEE COMMUNICATIONS MAGAZINE, IEEE SERVICE CENTER, PISCATAWAY, US, vol. 46, no. 7, 1 July 2008 (2008-07-01), pages 158-166, XP011229495, ISSN: 0163-6804, DOI: 10.1109/MCOM.2008.4557060
- CHIARONI D ET AL: "Packet OADMs for the next generation of ring networks", BELL LABS TECHNICAL JOURNAL, WILEY, CA, US, vol. 14, no. 4, 4 January 2010 (2010-01-04), pages 265-283, XP001552054, ISSN: 1089-7089, DOI: 10.1002/BLTJ.20415 [retrieved on 2010-02-23]
- GUSTAVO PUERTO LEGUIZAMON ET AL: "Investigation on the Signal Misalignment in Subcarrier Multiplexed Optical Label Swapping Routers: An Experimental Verification", JOURNAL OF LIGHTWAVE TECHNOLOGY, IEEE SERVICE CENTER, NEW YORK, NY, US, vol. 25, no. 7, 1 July 2007 (2007-07-01), pages 1854-1860, XP011186973, ISSN: 0733-8724, DOI: 10.1109/JLT.2007.899175
- SHUN YAO ET AL: "Advances in Photonic Packet Switching: An Overview", IEEE COMMUNICATIONS MAGAZINE, IEEE SERVICE CENTER, PISCATAWAY, US, vol. 38, no. 2, 1 February 2000 (2000-02-01), pages 84-94, XP011091232, ISSN: 0163-6804, DOI: 10.1109/35.819900

## Description

### Field of the invention

The invention relates to the technical field of optical communication systems employing a packet granularity.

### Background

Optical packet switching networks employing Wavelength Division Multiplexing (WDM) provide flexibility, high capacity and efficient use of the bandwidth through multiplexing techniques in both time and wavelength. An optical packet add and drop multiplexer (OPADM) for a WDM network makes it possible to perform fundamental functions such as optical packet insertion, optical packet extraction and transparent forwarding of transit traffic on each of a plurality of wavelength channels. The adoption of an optical transparency for the transit path contributes to reducing dramatically the number of transponders required in a switch/router architecture since a non significant part of the traffic crosses transparently the node.

As a conventional Reconfigurable Optical Add Drop Multiplexer, an OPADM typically comprises an optical unit managing the transit traffic in the optical domain, dropping traffic to a drop module and adding traffic from an add module, and an electronic unit that comprises the add and drop modules and interfaces with client devices. An OPADM architecture was described in "Optical Packet Add/Drop Multiplexers for packet ring networks," Proceedings of ECOC 2008, Brussels Expo, Belgium, pp 103-106, XP001524738.

Document "HOPSMAN: An Experimental Testbed System for a 10-Gb/s Optical Packet-Switched WDM Metro Ring Network" by M. Yuang et al, published in IEEE COMMUNICATIONS MAGAZINE (July 2008) discloses an optical node of a synchronous optical packet network that incorporates a SYNC monitoring module for extracting slot boundary timing and subsequently providing activation timing for other modules.

### Summary

In an embodiment, the invention provides a method for measuring a packet delay deviation representing a deviation between the start time of an optical packet and an average start time in an optical node of a synchronous network, the optical node having an input for receiving a plurality of input optical signals carried by a plurality of wavelength channels, each input optical signal including a plurality of time-sequential optical packets carried on a wavelength channel, wherein each optical packet starts with a packet label encoded in the input optical signal, the method comprising for each of the plurality of wavelength channels :
- splitting the input optical signal to generate a first optical signal and a second optical signal identical to the input optical signal,
- Shifting in time the second optical signal by one timeslot, one timeslot being for instance representative of an optical packet having a fixed duration plus its guardband, compared to the first optical signal,
the method further comprising, for each of the first optical signal and second optical signal:
- Detecting the packet label encoded in the optical signal,
- generating an electric detection pulse in response to detecting the packet label,

And the method further comprising:
- sending the first and second electric detection pulses for each wavelength channel to an AND-gate to generate a synchronization pulse representing a time-overlap between the first electronic pulse and the second electronic pulse,
- Measuring a wavelength-averaged delay time between the synchronization pulses obtained for each of the wavelength channels and a reference trigger signal having a periodicity of one time slot,
- Generating a synchronized trigger signal by phase shifting the reference trigger signal as a function of the wavelength-averaged delay time, and

### For each wavelength channel:

Comparing the synchronized trigger signal with the electronic detection pulse obtained from the first or second optical signal to determine a packet delay deviation between the synchronized trigger signal representing an average start time and the electronic detection pulse representing the start time of an optical packet on the first optical signal.

In embodiments, such a method may further comprise one or more of the following features.

In an embodiment, the method further comprises, for each wavelength channel :
- Comparing the packet delay deviation between the synchronized trigger signal and the electronic detection pulse to a critical delay reference,
the method further comprising, in response to detecting a packet delay deviation higher than the critical delay:
- dropping the optical packet having a packet delay deviation higher than the critical delay reference,
- adding an optical packet at an output of the optical node with a packet label starting at a time corresponding to the synchronized trigger signal, wherein the added packet carries the data of said dropped optical packet.

In an embodiment, the method further comprises, between the step of dropping the optical packet having a packet delay deviation higher than the critical delay reference and the step of adding an optical packet at an output of the optical node, storing the packet in a transit buffer for a resynchronization.

In an embodiment, the method further comprises in response to detecting a plurality of consecutive or successive optical packets carried on a wavelength channel having a packet delay deviation higher than the critical delay reference, sending an OAM message to a controller in the network.

In an embodiment, the method further comprises, for each wavelength channel, enlarging in time the electric detection pulses sent to the AND-gate.

In an embodiment, for each wavelength channels, the electric detection pulses are widened up to a reference duration, said reference duration is lower than a guard band between consecutives optical packets in the network.

In an embodiment, the method further comprises, for each wavelength channel:
- Generating an electronic pulse corresponding to the envelop of the first optical signal,
- Extracting a sample of the electronic pulse at a time corresponding to half a time-slot starting from the synchronized trigger signal,
- Comparing the amplitude of the sample to a critical power value,

The method further comprising, in response to detecting an amplitude lower than the critical power value:
- dropping the optical packet,
- adding an optical packet at an output of the optical node with a packet label starting at a time corresponding to the synchronized trigger signal, wherein the added packet carries the data of said dropped optical packet.

In an embodiment, the method further comprises, in response to detecting a plurality of consecutive optical packets carried on a wavelength channel having an amplitude of the sample lower than the critical power value, sending an OAM message to a controller in the network.

In an embodiment, the invention provides a monitoring device for an optical node of a synchronous optical network, comprising:
- A first input connectable to an optical fiber for receiving a WDM signal comprising a plurality of input optical signals, each input optical signal including a plurality of time-sequential optical packets carried on a wavelength channel, wherein each optical packet starts with a packet label encoded in the input optical signal,
- A second input connectable to the fiber for receiving the WDM optical signal, the second input comprising a fiber delay loop adapted to delay the WDM signal by one timeslot compared to the WDM signal received in the first input,
- a first wavelength demultiplexer connected to the first input and having a plurality of first outputs,
- a second wavelength demultiplexer connected to the second input and having a plurality of second outputs,
the monitoring device further comprising, respectively connected to the plurality of outputs of each wavelength demultiplexer,
- an optical decoder unit adapted to generate an electronic detection pulse in response to detecting a packet label,
The monitoring device further comprising
- An AND-gate adapted to receive a first and a second electronic detection pulses carried on the same wavelength channel from the first input and from the second input, the AND-gate being adapted to generate for each wavelength channel a synchronization pulse representing a time-overlap between the first electronic detection pulse and the second electronic detection pulse from the second input,
- A clock for generating a reference trigger signal having a periodicity of one time slot
- A measuring unit for measuring a wavelength-averaged delay time between the synchronization pulse obtained for each of the wavelength channels,
- A phase shifter for generating a synchronized trigger signal by phase shifting the reference trigger signal as a function of the wavelength-averaged delay time,
- A critical packet delay detector having a plurality of inputs connected to the outputs of optical decoder units connected to the outputs of the first or second wavelength demultiplexer for receiving the electronic detection pulses, the critical packet delay detector comprising a delay determination module adapted to compare for each wavelength channel the synchronized trigger signal with the electronic detection pulse to determine a packet delay deviation between the synchronized trigger signal representing an average start time and the electronic detection pulse representing the start time of an optical packet on the first optical signal.

In an embodiment, the optical decoder unit includes an optical decoder adapted to generate an optical pulse in response to detecting a packet label and a photodiode adapted to convert the optical pulse into a corresponding electronic pulse. In an embodiment, the steps of generating the electronic detection pulse comprises generating an optical pulse by the optical decoder and converting the optical pulse generated by the optical decoder into an electronic pulse by the photodiode.

In an embodiment, the critical packet delay detector further comprises for each wavelength channel:
- a comparator adapted to compare the packet delay deviation between the synchronized trigger signal and the electronic detection pulse to a critical delay time,
- a processing unit adapted to send a critical packet delay message to a controller unit of the optical node.

In an embodiment, the critical packet delay detector further comprises for each wavelength channel:
- a comparator adapted to compare the packet delay deviation between the synchronized trigger signal and the electronic detection pulse to a critical delay time,
- a processing unit adapted to send a critical packet delay message to a controller unit of the optical node.

In an embodiment, the monitoring device further comprises a critical packet power detector connected to an output of the first wavelength demultiplexer, the critical packet power detector comprising for the corresponding wavelength channel:
- a low passband photodiode adapted to generate an electronic pulse corresponding to an envelop of the optical input signal at the corresponding wavelength,
- a sampler adapted to extract a sample of the electronic pulse representing the packet envelop at a time corresponding to half a time-slot starting from the synchronized trigger signal,
- a comparator adapted to compare the sample amplitude to a critical power value,
- a processing unit adapted to send an OAM message to a controller unit of the optical node in response to detecting a sample amplitude lower than critical power value.

In an embodiment, the critical packet power detector further comprises an analogic to digital converter adapted to convert the optical input signal in digital signal.

Aspects of the invention are based on the idea of monitoring a flow of optical packets in systems or networks for metro and core networks. An idea of the invention is to monitor a packet delay and a packet power of an optical packet stream. An idea of the invention is to detect a critical packet delay in a packet flow. An idea of the invention is to avoid a destruction of packets when inserting a new packet. An idea of the invention is to detect a critical packet power in a packet flow. An idea of the invention is to maintain the signal quality of the consecutive or successive packets at the receiver side. An idea of the invention is to monitor regularly the packet flow in a network.

### Brief description of the drawings

These and other aspects of the invention will be apparent from and elucidated with reference to the embodiments described hereinafter, by way of example, with reference to the drawings.
Figure 1 is a functional representation of an optical packet add-drop multiplexer for an optical network;
Figure 2 is a representation of a monitoring unit that may be employed in the OPADM of figure 1;
Figure 3 represents time-slotted electronic pulses at different points in time during the monitoring of the WDM signal passing through the OPADM of figure 1;
Figure 4 is a representation of a critical packet delay unit in the monitoring unit of figure 2;
Figure 5 is a representation of a critical power detector unit in the monitoring unit of figure 2.

### Detailed description of the embodiments

An optical network, i.e. having a ring topology or other, comprises optical packet add-drop multiplexers (OPADM) connected by optical links, e.g. optical fibers. The ring network is a time-slotted network where data is transmitted within fixed-duration packets over the optical links. The payload of an optical packet may be distributed over several wavelengths, in which case the optical packet is named multicolor packet. The optical packets, whether single-color or multicolor, may be additionally WDM-multiplexed over the optical links. Data is transmitted within single-color or multicolor optical packets carried on N wavelength channels. To each single-color or multicolor optical packet is associated a header that contains the control data of the packet, including routing information e.g., the destination. Packets are transmitted synchronously over all wavelength channels. The packet duration is called a slot. For each slot, the headers for all single-color or multicolor packets transmitted during that slot are transmitted as a separate optical packet over a separate wavelength channel called control channel λc. Hence, data channels carry single-color or multicolor optical packets payload while the control channel λc carries the headers of the packets.

On data channels, each optical packet is separated from the preceding by an inter-packet gap called guard band. Moreover, each single-color or multicolor optical packet starts with the same combination of data which defines a start label or start word. Data payload follows this start label in the optical packet. On control channel λc, the structure of traffic may be similar to or different from the data channels. Namely, the duration of guard band on the control channel λc may be equal to or different from that of inter-packet guard band.

The OPADM nodes can insert or add traffic on any wavelength or group of wavelengths thanks to one or more fast tunable or fixed lasers or laser arrays, and can receive or drop traffic on specific wavelengths thanks to reconfigurable burst-mode receivers. The OPADM nodes can also let traffic pass transparently through the node, without a conversion to the electrical domain.

The network may also include a hub node, i.e. a different type of node which converts to electronic all the incoming optical packets on the one side, and fills all slots on all wavelengths with light, i.e. either data packets or dummy packets, on the other side. The hub node can interface with another network in a known manner.

A dummy packet is an optical packet with no meaningful content that is used for physical layer-related purposes, namely keeping power received by the optical amplifiers roughly constant over time.

In the optical packet switching network, a first OPADM node can generate an optical packet comprising a payload encapsulating a plurality of data frames, encoded over one or several wavelengths or not, e.g. data frames coming from one or more client devices. At the same time the first OPADM node generates control data associated to the single-color or multicolor optical packet. The generated control data comprises destination data indicating the destination of the encapsulated data frames. At a destination node the single-color or multicolor optical packet is received and demodulated to obtain an electrical signal comprising the payload.

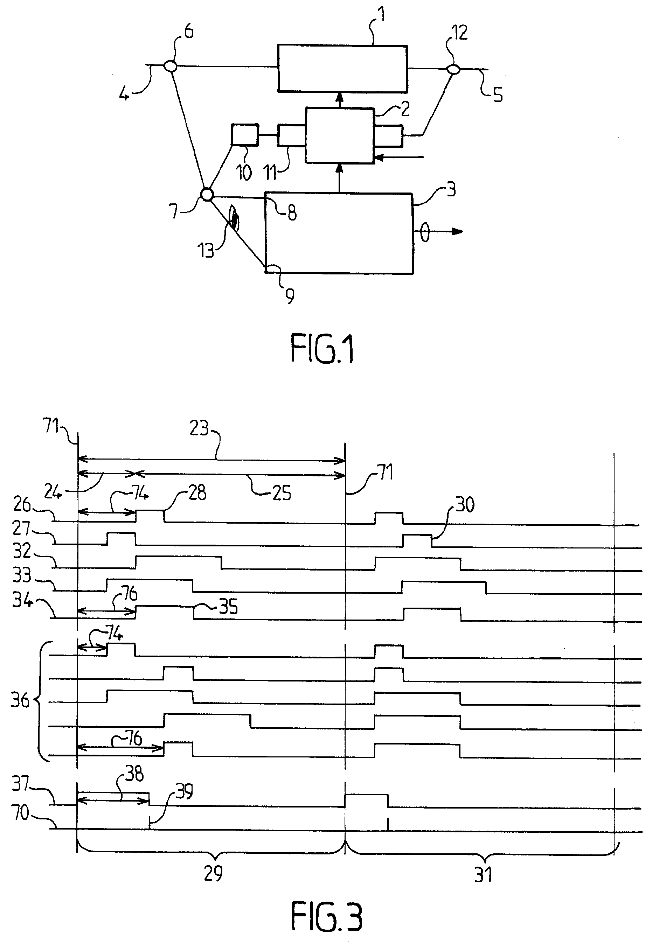

With reference to Fig 1, the detailed architecture of an OPADM will now be described. The OPADM architecture comprises essentially three building blocks: an optical switching unit 1, a controller unit 2 and a monitoring unit 3.

An input fiber 4 serves to receive WDM traffic from the nodes located upstream in the ring and an output fiber 5 serves to transmit WDM traffic to the nodes located downstream in the ring.

The input fiber 4 is connected to an input of a first optical coupler 6. A first output of the first optical coupler 6 is connected to the switching unit 1. A second output of the first optical coupler 6 is connected to an input of a second optical coupler 7. A first output of the second optical coupler 7 is connected to the controller unit 2. A second output of the second optical coupler 7 is connected to a first input 8 of the monitoring unit 3. A third output of the second optical coupler 7 is connected to a second input 9 of the monitoring unit 3. The first optical coupler 6 and the second optical coupler 7 both duplicate the WDM signal and send it on their outputs. An optical transponder 10 with a wavelength-specific filter 11 extracts the control channel λc of the WDM signal for the control unit 2. The control unit 2 can inject optical packets into the output fiber 5 through a third optical coupler 11 or multiplexer. The injected optical packets are multiplexed with the outgoing data packets passed through the switching unit 1. The control channel is opaque, namely it is submitted to optical-to- electrical and electrical-to-optical conversions at each node. As described above, the switching unit 1 can block or let pass the optical packets according to instructions of the control unit 2. An example of switching unit 1 controlled by the control unit 2 is described in the document EP2458761.

The monitoring unit 3 handles synchronization between packets across wavelength channels, insuring that no packet could be inserted by the controller at a time and wavelength that conflicts with a transiting packet. The connection between the third output of the second optical coupler 7 and the second input 9 of the monitoring unit 3 includes a fiber delay loop 13. This fiber delay loop 13 shifts in time the WDM signal for a duration of one time-slot, i.e. an optical packet received by the first input 8 of the monitoring unit 3 is received by the second input 9 of the monitoring unit 3 exactly one time-slot later.

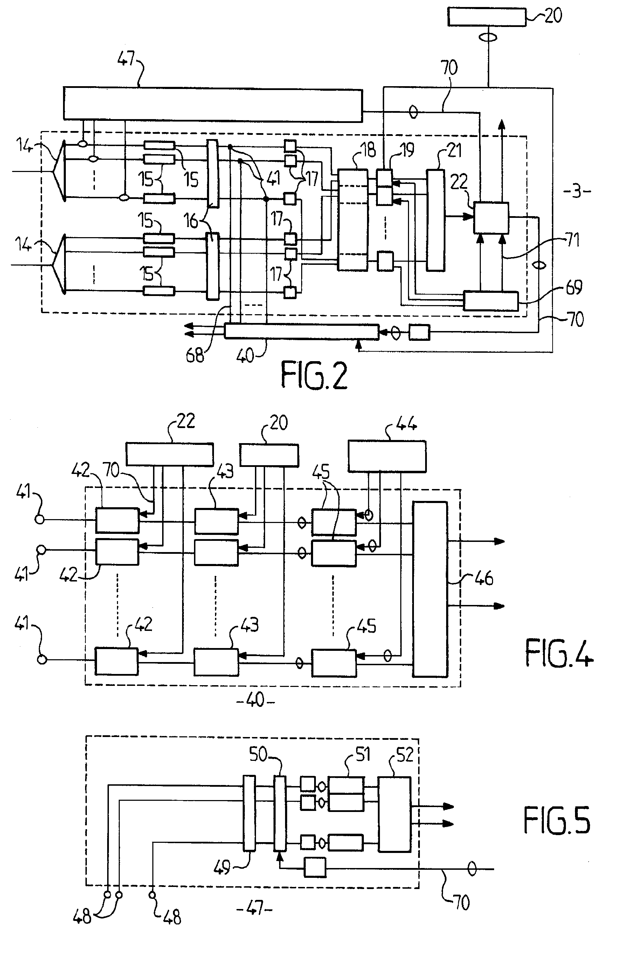

The figures 2 to 5 focus on the monitoring unit 3.

The monitoring unit 3 serves to detect both critical packet delay deviations and critical packet powers. The monitoring unit 3 extracts the average packet delay to conduct the detection of the critical packet delay deviations and the detection of the critical packet powers. The monitoring unit 3 is adapted to a synchronous and continuous packet stream, with a packet jitter tolerated in the range of few tens of nanoseconds per packet.

Each input 8, 9 of the monitoring unit 3 is connected to the input of an optical demultiplexer 14 to separate the WDM signal in a plurality of optical signals carried each one on a single wavelength channel. Each output of the demultiplexers 14 is connected to an input of an optical decoder 15. The optical decoders 15 generate an optical pulse when a start label, located in front of a single wavelength optical packet after the guard band, is recognized. The output of each optical decoder 15 is connected to an input of a photodiode 16. The photodiodes 16 convert the optical pulses generated by the optical decoders 15 into electronic pulses. The output of each photodiode 16 is connected to the input of a pulse widening device 17. The pulse widening devices 17 adjust the duration of the electronic pulses to the desired tolerance value, for instance to a duration corresponding to the guard band or to half the guard band duration.

The output of each pulse widening device 17 is connected to a comparator 18. Such a comparator 18 may be an AND-gate. The comparator 18 is adapted to compare the electronic pulses generated from the WDM signal received in the first input 8 of the monitoring unit 3 to the electronic pulses generated from the corresponding wavelength of the WDM signal received in the second input 9 of the monitoring unit 3, i.e. the comparator 18 compares the electronic pulse of an optical packet carried on a wavelength channel of the WDM signal with the electronic pulse of the following optical packet on the same wavelength channel.

Each output of the comparator 18 is connected to an input of a counter 19. The counters 19 count the delay (represented at numeral 76 on figure 3) between a reference trigger time 71 provided by a clock 69 and the rising edge of the electronic pulse generated by the comparator 18. This rising edge is representative of the effective delay of the optical packets for each wavelength compared to the ticking of a reference clock 69, i.e. the reference trigger time 71.

The outputs of the counters 19 are connected to a plurality of inputs of a processing unit 21. The processing unit 21 computes a wavelength-averaged delay as a function of all the counted delays 76 over all wavelengths. This average delay is sent to a phase shifter 22. The phase shifter 22 shifts in time the reference trigger clock signal as a function of the average delay. Thus, the phase-shifted reference trigger time 70 is synchronized with the average start time of all the packets in the packet flow in a given time slot.

If a start label is detected in the data payload of an optical packet, the step of comparison will not generate an accidental electronic pulse, and no resulting delay will be computed. This is because there is no substantial probability to encounter a sequence of bits identical to the start label in the data payload of two consecutives optical packets carried on the same wavelength. Consequently, the duplication of the WDM signal with a one timeslot shifting and the comparison between consecutives optical packets avoid performing a delay estimation with an accidental start label detected in a payload.

Figure 3 represents time-slotted electronic pulses as a function of wavelength channel in the WDM signal at different times during the monitoring of said WDM signal through the OPADM of figure 1.

For the sake of clarity, figure 3 shows the processing of pulses corresponding to only two wavelengths, but the WDM signal may include more optical signals multiplexed and carried on more wavelength channels. For the sake of clarity, figure 3 shows only two timeslots 23, each timeslot 23 including a guardband 24 and an optical packet duration 25.

A first time line 26 represents detection pulses generated by a packet flow carried on a first wavelength received in the first input 8 of the monitoring unit 3 at the output of the photodiode 16. A second time line 27 represents detection pulses generated by a packet flow carried on said first wavelength and received in the second input 9 of the monitoring unit 3. As illustrated, an electronic pulse is generated when a start label is detected. The second timeline 27 is identical to the first timeline 26 shifted in time of one timeslot. Consequently, an electronic pulse 28 on the first timeline 26 in a first timeslot 29 corresponds to the same packet as an electronic pulse 30 on the second time line 27 during a second timeslot 31.

A third timeline 32 and a fourth timeline 33 represent the electronic pulses illustrated on respectively on the first timeline 26 and the second timeline 27 at the outputs of the pulse widening devices 17. The electronic pulses generated by the photodiodes 16 shown on first timeline 26 and second timeline 27 are widened in time up to a duration corresponding to the guard band 24.

A fifth timeline 34 represents an electronic pulse 35 generated at the output of the AND-gate 18 by comparing the electronic pulses as shown on the third timeline 32 and the fourth timeline 33. As illustrated, the electronic pulse 35 at the output of the AND-gate 18 corresponds to the overlap of the electronic pulses at the outputs of the pulse widening devices 17 for the same wavelength.

The same scheme as the one illustrated in view of first timeline 26 to fifth timeline 34 is illustrated on a second group 36 of timelines corresponding to the optical packets carried on the second wavelength.

A sixth timeline 37 illustrates the average delay 38 computed by the processing unit 21 as a function of the delays measured on each wavelength. This average delay is used to generate the synchronized trigger signal 70 which is illustrated on a seventh timeline 39.

The average delay time 38, i.e. the ticking of the synchronized trigger 70, is then used to detect critical packet delay deviation and/or critical packet power problems, as described hereafter in view of figures 4 and 5

The Figure 4 represents one implementation scheme for a critical packet delay deviation detector 40 of figure 2.

As illustrated on figure 2, the critical packet delay deviation detector 40 is connected to a plurality of fourth couplers 41. These fourth couplers 41 are located at the outputs of the photodiodes 16 receiving the detection pulses from the first input 8 of the monitoring unit 3. Moreover, the critical packet delay deviation detector 40 is connected to the clock 20 and to the phase shifter 22.

The critical packet delay detector 40 comprises a plurality of delay difference units 42. Each delay difference unit 42 is connected to a fourth coupler 41 for receiving a detection pulse and to the phase shifter 22 for receiving the synchronized trigger 70. The delay difference units 42 measures for each wavelength the difference between the average delay time 38 and the effective starting time 74 of the optical packet carried on the corresponding wavelength. A plurality of counters 43 connected each one to the clock 20 then count the delay deviation between the average delay time 38 and the effective delay 74 time of each packet on each wavelength. This delay deviation between the average delay time 38 and the effective delay time 74 is then compared to a reference value 44 in a comparator 45 for each wavelength. This reference value corresponds to the maximum delay deviation acceptable in the node. If the delay deviation between the average delay time 38 and the effective delay time 74 of an optical packet is higher than the reference value, then a critical packet delay deviation is detected by a processing unit 46 of the critical packet delay deviation detector 40.

If the critical delay deviations are occurring like rare events, the information is send to the control unit 2 to extract the optical packet having a critical delay deviation. The optical packet having the critical delay deviation is blocked in the switching unit 1. A new optical packet including the same payload data as the detected critical packet is then generated by the control unit 2. This new optical packet is inserted in the output fiber 5 in a re-synchronized manner, i.e. without having a critical delay deviation.

If the problem is not limited to one optical packet, there may be a need in that case to inform about the problem the other nodes in the network, and in particular the hub, through the OAM channel. Thus, if critical delay deviations are occurring at each slot on the same wavelength, the information is sent to the OAM to inform the manager of the network and activate a protection scheme. This OAM channel can be transported on another wavelength or the OAM information can be transported directly in the control channel.

Figure 5 represents a module 47 required to detect critical power variations between consecutive optical packets. The critical power detection module 47 is connected to a plurality of fifth optical couplers 48. Such fifth optical couplers 48 are located upstream of the optical decoders 15 receiving the optical signals from the first input 8 of the monitoring unit 3. The critical power variation module 47 comprises low passband photodiodes 49. The low passband photodiodes 49 are connected to all fifth coupler 48 to convert optical signals carried on the wavelength channels in an electronic pulse corresponding to the envelop of an optical packet. Each electronic pulse is then sent to a sampler 50. The samplers 50 are controlled with the synchronized trigger signal 70 from the phase shifter 22. The samplers extract a sample of the pulses at half a packet duration time 25 starting from the ticking of synchronized trigger signal 70 to pick the center of the electronic pulses. A duplication of the trigger could be envisaged to take several samples in order to compute an average packet power value for a better precision.

In that implementation, we have then an analog to digital converter, to quantize the value of the amplitude of each sample representative of a optical packet.

The samples are then compared to a reference power value in comparator 51. The difference between the amplitude of the sample and the reference power value is sent to a processing unit 52 which identifies if the optical packet power is in the tolerance or not. For the slots that are out of the range, i.e. having a critical low power, a signal is then sent to the control unit 2 to extract the optical packet and correctly re-insert a new optical packet having the same payload data as described above. If the processing unit identifies a problem for consecutives optical packets carried on a wavelength, a signal is then sent to the OAM channel to inform the other nodes and the hub. Such a re-insertion of the packet guarantees a regeneration of the power of the optical packet without delay problems, increasing its chances to reach successfully the final destination.

Elements such as the control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

For instance, the electronic pulses 28, 30 corresponding to the detection of a label in the packet flow may be generated by any adapted device. For instance, the electronic pulse is generated by an optical decoder in series with a photodiode. An example of optical decoder is described in the document N. Kataoka, G. Cincotti, , N. Wada, K.-i Kitayama "Demonstration of optical label processing of 250 address entries for scalable optical packet switched networks," 16th OptoElectronics and Communication Conference (OECC), Kaohsiung, Taiwan 2011.

In a modified embodiment, the connection line 68 between the critical packet delay unit 40 and the first optical input line 8 may be located before the photodiode 16, so as to extract from a high bit rate optical signal a low frequency optical signal in order to have a low frequency electronic processing. The monitoring unit could be also implemented in core networks and bus topologies.

In an embodiment, the guard band is suppressed since the control channel is in a synchronous point-to-point configuration.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for measuring a packet delay deviation representing a deviation between the start time of an optical packet and an average start time in an optical node of a synchronous network, the optical node having an input for receiving a plurality of input optical signals carried by a plurality of wavelength channels, each input optical signal including a plurality of time-sequential optical packets carried on a wavelength channel, wherein each optical packet starts with a packet label encoded in the input optical signal, the method comprising for each of the plurality of wavelength channels :
- splitting the input optical signal to generate a first optical signal and a second optical signal identical to the input optical signal,
- Shifting in time the second optical signal by one timeslot compared to the first optical signal,
the method further comprising, for each of the first optical signal and second optical signal:
- Detecting the packet label encoded in the optical signal,
- generating an electric detection pulse (28, 30) in response to detecting the packet label,
And the method further comprising:
- sending the first and second electric detection pulses for each wavelength channel to an AND-gate to generate a synchronization pulse (35) representing a time-overlap between the first electronic pulse and the second electronic pulse,
- Measuring a wavelength-averaged delay time (38) between the synchronization pulses obtained for each of the wavelength channels and a reference trigger signal (71) having a periodicity of one time slot,
- Generating a synchronized trigger signal (39) by phase shifting the reference trigger signal (71) as a function of the wavelength-averaged delay time, and
For each wavelength channel:
- Comparing the synchronized trigger signal with the electronic detection pulse (28) obtained from the first optical signal to determine a packet delay deviation between the synchronized trigger signal representing an average start time (38) and the electronic detection pulse representing the start time (74) of an optical packet on the first optical signal.

2. A method according to claim 1, the method further comprising, for each wavelength channel :
- Comparing the packet delay deviation between the synchronized trigger signal and the electronic detection pulse to a critical delay reference,
the method further comprising, in response to detecting a packet delay deviation higher than the critical delay:
- dropping the optical packet having a packet delay deviation higher than the critical delay reference,
- adding an optical packet at an output of the optical node with a packet label starting at a time corresponding to the synchronized trigger signal, wherein the added packet carries the data of said dropped optical packet.

3. A method according to claim 2, the method further comprising in response to detecting a plurality of consecutive optical packets carried on a wavelength channel having a packet delay deviation higher than the critical delay reference, sending an OAM message to a controller in the network.

4. A method according to any one of claims 1 to 3, the method further comprising, for each wavelength channel, enlarging in time the electric detection pulses sent to the AND-gate.

5. A method according to claim 4, wherein, for each wavelength channels, the electric detection pulses are widened up to a reference duration, said reference duration is lower than a guard band between consecutives optical packets in the network.

6. A method according to any one of claims 1 to 5, the method further comprising, for each wavelength channel:
- Generating an electronic pulse corresponding to the envelop of the first optical signal,
- Extracting a sample of the electronic pulse at a time corresponding to half a time-slot starting from the synchronized trigger signal,
- Comparing the amplitude of the sample to a critical power value,
The method further comprising, in response to detecting an amplitude lower than the critical power value:
- dropping the optical packet,
- adding an optical packet at an output of the optical node with a packet label starting at a time corresponding to the synchronized trigger signal, wherein the added packet carries the data of said dropped optical packet.

7. A method according to claim 6, the method further comprising, in response to detecting a plurality of consecutive optical packets carried on a wavelength channel having an amplitude of the sample lower than the critical power value, sending an OAM message to a controller in the network.

8. A monitoring device for an optical node of a synchronous optical network, comprising:
- A first input (8) connectable to an optical fiber for receiving a WDM signal comprising a plurality of input optical signals, each input optical signal including a plurality of time-sequential optical packets carried on a wavelength channel, wherein each optical packet starts with a packet label encoded in the input optical signal,
- A second input (9) connectable to the fiber for receiving the WDM optical signal, the second input comprising a fiber delay loop (13) adapted to delay the WDM signal by one timeslot compared to the WDM signal received in the first input,
- a first wavelength demultiplexer (14) connected to the first input and having a plurality of first outputs,
- a second wavelength demultiplexer (14) connected to the second input and having a plurality of second outputs,
the monitoring device further comprising, respectively connected to the plurality of outputs of each wavelength demultiplexer,
- an optical decoder (15) unit adapted to generate an electronic detection pulse (28, 38)in response to detecting a packet label,
The monitoring device further comprising
- An AND-gate (18) adapted to receive a first and a second electronic detection pulses (28, 38)carried on the same wavelength channel from the first input and from the second input, the AND-gate being adapted to generate for each wavelength channel a synchronization pulse representing a time-overlap between the first electronic detection pulse and the second electronic detection pulse from the second input,
- A clock (20) for generating a reference trigger signal (71)having a periodicity of one time slot
- A measuring unit (19) for measuring a wavelength-averaged delay time between the synchronization pulse obtained for each of the wavelength channels,
- A phase shifter (22) for generating a synchronized trigger signal (39) by phase shifting the reference trigger signal (71) as a function of the wavelength-averaged delay time,
- A critical packet delay detector (40) having a plurality of inputs connected to the outputs of optical decoder units connected to the outputs of the first wavelength demultiplexer for receiving the electronic detection pulses (28), the critical packet delay detector comprising a delay determination module (42) adapted to compare for each wavelength channel the synchronized trigger signal (39) with the electronic detection pulse (28) to determine a packet delay deviation between the synchronized trigger signal representing an average start time (38) and the electronic detection pulse representing the start time (74) of an optical packet on the first optical signal.

9. The monitoring device according to claim 8, wherein the critical packet delay detector further comprises for each wavelength channel:
- a comparator (45) adapted to compare the packet delay deviation between the synchronized trigger signal (39) and the electronic detection pulse (28) to a critical delay time,
- a processing unit (46) adapted to send a critical packet delay message to a controller unit of the optical node.

10. The monitoring device according to anyone of claims 8 to 9, further comprising a critical packet power detector (47) connected to an output of the first wavelength demultiplexer, the critical packet power detector comprising for the corresponding wavelength channel:
- a low passband photodiode (49) adapted to generate an electronic pulse corresponding to an envelop of the optical input signal at the corresponding wavelength,
- a sampler (50) adapted to extract a sample of the electronic pulse at a time corresponding to half a time-slot starting from the synchronized trigger signal,
- a comparator (51) adapted to compare the sample amplitude to a critical power value,
- a processing unit (52) adapted to send an OAM message to a controller unit of the optical node in response to detecting a sample amplitude lower than critical power value.

11. The monitoring device according to claim 10, wherein the critical packet power detector further comprises an analogic to digital converter adapted to convert the optical input signal into a digital signal.

## Patentansprüche

1. Verfahren zum Messen einer Paketverzögerungsabweichung, die eine Abweichung darstellt zwischen der Startzeit eines optischen Pakets und einer durchschnittlichen Startzeit in einem optischen Knoten eines synchronen Netzwerks, wobei der optische Knoten einen Eingang aufweist zum Empfangen einer Vielzahl von optischen Eingangssignalen, die von einer Vielzahl von Wellenlängenkanälen transportiert werden, wobei jedes optische Eingangssignal eine Vielzahl von zeitlich sequentiellen optischen Paketen einschließt, die auf einem Wellenlängenkanal transportiert werden, wobei jedes optische Paket mit einem im optischen Eingangssignal codierten Paketetikett startet, wobei das Verfahren für jede Vielzahl von Wellenlängenkanälen umfasst:
- Splitten des optischen Eingangssignals zum Erzeugen eines ersten optischen Signals und eines zweiten optischen Signals, die identisch sind mit dem optischen Eingangssignal,
- zeitliche Verschiebung des zweiten optischen Signals um einen Zeitschlitz im Vergleich zum ersten optischen Signal,
wobei das Verfahren weiterhin für jedes der ersten und zweiten optischen Signale umfasst:
- Erkennen des im optischen Signal codierten Paketetiketts,
- Erzeugen eines elektrischen Erkennungsimpulses (28, 30) als Antwort auf das Erkennen des Paketetiketts,
Und wobei das Verfahren weiterhin umfasst:
- Senden des ersten und zweiten elektrischen Erkennungsimpulses für jeden Wellenlängenkanal an ein AND-Gate zum Erzeugen eines Synchronisationsimpulses (35), der eine zeitliche Überlappung darstellt zwischen dem ersten elektronischen Impuls und dem zweiten elektronischen Impuls,
- Messen einer wellenlängengemittelten Verzögerungszeit (38) zwischen dem Synchronisationsimpuls, der für jeden der Wellenlängenkanäle erhalten wird, und einem Referenz-Trigger-Signal (71), das die Periodizität von einem Zeitschlitz aufweist,
- Erzeugen eines synchronisierten Trigger-Signals (39) durch Phasenverschieben des Referenz-Trigger-Signals (71) als Funktion der wellenlängengemittelten Verzögerungszeit, und
Für jeden Wellenlängenkanal:
- Vergleichen des synchronisierten Trigger-Signals mit dem elektronischen Erkennungsimpuls (28), der vom ersten optischen Signal erhalten worden ist, zum Bestimmen einer Paketverzögerungsabweichung zwischen dem synchronisierten Trigger-Signal, das eine durchschnittliche Startzeit (38) darstellt, und dem elektronischen Erkennungsimpuls, der die Startzeit (74) eines optischen Pakets auf dem ersten optischen Signal darstellt.

2. Verfahren nach Anspruch 1, wobei das Verfahren weiterhin umfasst, für jeden Wellenlängenkanal:
- Vergleichen der Paketverzögerungsabweichung zwischen dem synchronisierten Trigger-Signal und dem elektronischen Erkennungsimpuls mit einer kritischen Verzögerungsreferenz,
wobei das Verfahren weiterhin umfasst, als Antwort auf das Erkennen einer Paketverzögerungsabweichung, die größer ist als die kritische Verzögerung:
- Ablehnen des optischen Pakets mit einer größeren Paketverzögerungsabweichung als die kritische Verzögerungsreferenz,
- Hinzufügen eines optischen Pakets an einem Ausgang des optischen Knotens mit einem Paketetikett, das zu einem Zeitpunkt startet, der dem des synchronisierten Trigger-Signals entspricht, wobei das hinzugefügte Paket die Daten besagten abgelehnten optischen Pakets transportiert.

3. Verfahren nach Anspruch 2, wobei das Verfahren weiterhin umfasst als Antwort auf das Erkennen einer Vielzahl aufeinanderfolgender optischer Pakete, die auf einem Wellenlängenkanal transportiert werden, wobei die Paketverzögerungsabweichung größer ist als die kritische Verzögerungsreferenz, Senden einer OAM-Nachricht an einen Controller im Netzwerk.

4. Verfahren nach irgendeinem der Ansprüche 1 bis 3, wobei das Verfahren weiterhin umfasst, für jeden Wellenlängenkanal, eine zeitliche Erweiterung des elektrischen Erkennungsimpulses, der an das AND-Gate gesendet wurde.

5. Verfahren nach Anspruch 4, wobei, für jeden Wellenlängenkanal,
die elektrischen Erkennungsimpulse erweitert werden bis auf eine Referenzdauer, wobei besagte Referenzdauer kürzer ist als ein Schutzband zwischen aufeinanderfolgenden optischen Paketen im Netzwerk.

6. Verfahren nach einem beliebigen der Ansprüche 1 bis 5, wobei das Verfahren weiterhin umfasst, für jeden Wellenlängenkanal:
- Erzeugen eines elektronischen Impulses, der der Hülle des ersten optischen Signals entspricht,
- Extrahieren eines Musters des elektronischen Impulses zu einem Zeitpunkt, der der Hälfte des Zeitschlitzes entspricht, der mit dem synchronisierten Trigger-Signal startet,
- Vergleichen der Amplitude des Musters mit einem kritischen Leistungswert, Wobei das Verfahren weiterhin umfasst, als Antwort auf das Erkennen einer Amplitude, die geringer ist als der kritische Leistungswert:
- Ablehnen des optischen Pakets,
- Hinzufügen eines optischen Pakets an einem Ausgang des optischen Knotens mit einem Paketetikett, das zu einem Zeitpunkt startet, der dem des synchronisierten Trigger-Signals entspricht, wobei das hinzugefügte Paket die Daten besagten abgelehnten optischen Pakets transportiert.

7. Verfahren nach Anspruch 6, wobei das Verfahren weiterhin umfasst, als Antwort auf das Erkennen einer Vielzahl von aufeinanderfolgenden optischen Paketen, die auf einem Wellenlängenkanal transportiert werden und eine Amplitude aufweisen, die geringer ist als der kritische Leistungswert, Senden einer OAM-Nachricht an einen Controller im Netzwerk.

8. Überwachungsvorrichtung für einen optischen Knoten eines synchronen optischen Netzwerks, umfassend:
- einen ersten Eingang (8), anschließbar an eine optische Faser zum Empfangen eines WDM-Signals, umfassend eine Vielzahl von optischen Eingangssignalen, wobei jedes optische Eingangssignal eine Vielzahl von zeitlich sequentiellen optischen Paketen einschließt, die auf einem Wellenlängenkanal transportiert werden, wobei jedes optische Paket mit einem Paketetikett startet, das im optischen Eingangssignal codiert ist,
- einen zweiten Eingang (9), anschließbar an die Faser zum Empfangen des optischen WDM-Signals, wobei der zweite Eingang eine Faserverzögerungsschleife (13) umfasst, die ausgelegt ist zum Verzögern des WDM-Signals um einen Zeitschlitz im Vergleich zu dem WDM-Signal, das im ersten Eingang empfangen wird,
- einen ersten Wellenlängen-Demultiplexer (14), der am ersten Eingang angeschlossen ist und eine Vielzahl von ersten Ausgängen aufweist,
- einen zweiten Wellenlängen-Demultiplexer (14), der am zweiten Eingang angeschlossen ist und eine Vielzahl von zweiten Ausgängen aufweist,
wobei die Überwachungsvorrichtung weiterhin umfasst, entsprechend angeschlossen an die Vielzahl von Ausgängen von jedem Wellenlängen-Demultiplexer,
- eine optische Decodiereinheit (15), die ausgelegt ist zum Erzeugen eines elektronischen Erkennungsimpulses (28, 38), als Antwort auf das Erkennen eines Paketetiketts,
Wobei die Überwachungsvorrichtung weiterhin umfasst
- ein AND-Gate (18), das ausgelegt ist zum Empfangen eines ersten und eines zweiten elektronischen Erkennungsimpulses (28, 38), die auf demselben Wellenlängenkanal transportiert werden vom ersten Eingang und vom zweiten Eingang, wobei das AND-Gate ausgelegt ist zum Erzeugen, für jeden Wellenlängenkanal, eines Synchronisationsimpulses, der eine zeitliche Überlappung darstellt zwischen dem ersten elektronischen Erkennungsimpuls und dem zweiten elektronischen Erkennungsimpuls vom zweiten Eingang,
- eine Uhr (20) zum Erzeugen eines Referenz-Trigger-Signals (71) mit einer Periodizität von einem Zeitschlitz
- eine Messeinheit (19) zum Messen einer wellenlängengemittelten Verzögerungszeit zwischen den Synchronisationsimpulsen, die für jeden der Wellenlängenkanäle erhalten werden,
- einen Phasenschieber (22) zum Erzeugen eines synchronisierten Trigger-Signals (39) durch Phasenverschieben des Referenz-Trigger-Signals (71) als Funktion der wellenlängengemittelten Verzögerungszeit,
- Einen kritischen Paketverzögerungsdetektor (40), der eine Vielzahl von Eingängen aufweist, die mit den Ausgängen von optischen Decodereinheiten verbunden sind, die mit den Ausgängen des ersten Wellenlängen-Demultiplexers verbunden sind zum Empfangen der elektronischen Erkennungsimpulse (28), wobei der kritische Paketverzögerungsdetektor ein Verzögerungsbestimmungsmodul (42) umfasst, das ausgelegt ist zum Vergleichen des synchronisierten Trigger-Signals (39) für jeden Wellenlängenkanal mit dem elektronischen Erkennungsimpuls (28) zum Bestimmen einer Paketverzögerungsabweichung zwischen dem synchronisierten Trigger-Signal, das eine durchschnittliche Startzeit (38) darstellt, und dem elektronischen Erkennungsimpuls, der die Startzeit (74) eines optischen Pakets auf dem ersten optischen Signal darstellt.

9. Überwachungsvorrichtung nach Anspruch 8, wobei der kritische Paketverzögerungsdetektor weiterhin für jeden Wellenlängenkanal umfasst:
- einen Komparator (45), der ausgelegt ist zum Vergleichen der Paketverzögerungsabweichung zwischen dem synchronisierten Trigger-Signal (39) und dem elektronischen Erkennungsimpuls (28) mit einer kritischen Verzögerungszeit,
- eine Verarbeitungseinheit (46), die ausgelegt ist zum Senden einer kritischen Paketverzögerungsnachricht an eine Controllereinheit des optischen Knotens.

10. Überwachungsvorrichtung nach irgendeinem der Ansprüche 8 bis 9, weiterhin umfassend einen kritischen Paketleistungsdetektor (47), der mit einem Ausgang des ersten Wellenlängen-Demultiplexers verbunden ist, wobei der kritische Paketleistungsdetektor für den entsprechenden Wellenlängenkanal umfasst:
- eine Tiefpassband-Photodiode (49), die ausgelegt ist zum Erzeugen eines elektronischen Impulses, der einer Hülle des optischen Eingangssignals an der entsprechenden Wellenlänge entspricht,
- einen Sampler (50), der ausgelegt ist zum Extrahieren eines Musters des elektronischen Impulses zu einem Zeitpunkt, der der Hälfte eines Zeitschlitzes entspricht, an dem das synchronisierte Trigger-Signal startet,
- einen Komparator (51), der ausgelegt ist zum Vergleichen der Musteramplitude mit einem kritischen Leistungswert,
- eine Verarbeitungseinheit (52), die ausgelegt ist zum Senden einer OAM-Nachricht an eine Controllereinheit des optischen Knotens als Antwort auf das Erkennen einer Musteramplitude, die geringer ist als der kritische Leistungswert.

11. Überwachungsvorrichtung nach Anspruch 10, wobei der kritische Paketleistungsdetektor weiterhin umfasst einen Analog-Digital-Wandler, der ausgelegt ist zum Umwandeln des optischen Eingangssignals in ein digitales Signal.

## Revendications

1. Procédé de mesure d'un écart de retard de paquet représentant l'écart entre le temps de départ d'un paquet optique et un temps de départ moyen dans un noeud optique d'un réseau synchrone, le noeud optique disposant d'une entrée destinée à recevoir une pluralité de signaux optiques d'entrée acheminés par une pluralité de canaux de longueur d'onde, chaque signal optique d'entrée incluant une pluralité de paquets optiques séquencés dans le temps acheminés sur un canal de longueur d'onde, dans lequel chaque paquet optique débute par une étiquette de paquet codée dans le signal optique d'entrée, le procédé comprenant les étapes suivantes pour chaque canal de la pluralité de canaux de longueur d'onde :
- diviser le signal optique d'entrée pour générer un premier signal optique et un deuxième signal optique identiques au signal optique d'entrée,
- décaler dans le temps le deuxième signal optique d'un créneau temporel par rapport au premier signal optique,
le procédé comprenant en outre, pour chacun des premier et deuxième signaux optiques, les étapes suivantes :
- détecter l'étiquette de paquet codée dans le signal optique,
- générer une impulsion de détection électrique (28, 30) en réponse à la détection de l'étiquette de paquet, et
le procédé comprenant en outre les étapes suivantes :
- envoyer la première et la deuxième impulsions de détection électriques pour chaque canal de longueur d'onde vers une porte ET afin de générer une impulsion de synchronisation (35) représentant un chevauchement temporel entre la première impulsion électronique et la deuxième impulsion électronique,
- mesurer un temps de retard moyen de longueur d'onde (38) entre les impulsions de synchronisation obtenues pour chacun des canaux de longueur d'onde et un signal de déclenchement de référence (71) dont la période est égale à un créneau temporel,
- générer un signal de déclenchement synchronisé (39) par décalage de phase du signal de déclenchement de référence (71) en fonction du retard moyen de longueur d'onde, et
pour chaque canal de longueur d'onde :
- comparer le signal de déclenchement synchronisé à l'impulsion de détection électronique (28) obtenue à partir du premier signal optique afin de déterminer un écart de retard de paquet entre le signal de déclenchement synchronisé représentant un temps de départ moyen (38) et l'impulsion de détection électronique représentant le temps de départ (74) d'un paquet optique du premier signal optique.

2. Procédé selon la revendication 1, comprenant en outre, pour chaque canal de longueur d'onde, l'étape suivante :
- comparer l'écart de retard de paquet entre le signal de déclenchement synchronisé et l'impulsion de détection électronique à un retard critique de référence,
le procédé comprenant en outre, en réponse à la détection d'un écart de retard de paquet supérieur au retard critique, les étapes suivantes :
- extraire le paquet optique ayant un écart de retard de paquet supérieur au retard critique de référence,
- insérer un paquet optique au niveau d'une sortie du noeud optique avec une étiquette de paquet démarrant à un instant correspondant au signal de déclenchement synchronisé, le paquet inséré transportant les données dudit paquet optique extrait.

3. Procédé selon la revendication 2, comprenant en outre en réponse à la détection d'une pluralité de paquets optiques consécutifs acheminés sur un canal de longueur d'onde ayant un écart de retard de paquet supérieur au retard critique de référence, l'envoi d'un message OAM à un contrôleur du réseau.

4. Procédé selon l'une quelconque des revendications 1 à 3, comprenant en outre, pour chaque canal de longueur d'onde, un élargissement temporel des impulsions de détection électriques envoyées à la porte ET.

5. Procédé selon la revendication 4, dans lequel, pour chaque canal de longueur d'onde, les impulsions de détection électriques sont élargies jusqu'à une durée de référence, ladite durée de référence étant inférieure à une bande de garde entre des paquets optiques consécutifs sur le réseau.

6. Procédé selon l'une quelconque des revendications 1 à 5, comprenant en outre, pour chaque canal de longueur d'onde, les étapes suivantes :
- générer une impulsion électronique correspondant à l'enveloppe du premier signal optique,
- extraire un échantillon de l'impulsion électronique à un instant correspondant à la moitié d'un créneau temporel démarrant à partir du signal de déclenchement synchronisé,
- comparer l'amplitude de l'échantillon à une valeur de puissance critique,
le procédé comprenant en outre, en réponse à la détection d'une amplitude inférieure à la valeur de puissance critique, les étapes suivantes :
- extraire le paquet optique,
- insérer un paquet optique au niveau d'une sortie du noeud optique avec une étiquette de paquet démarrant à un instant correspondant au signal de déclenchement synchronisé, le paquet inséré transportant les données dudit paquet optique extrait.

7. Procédé selon la revendication 6, comprenant en outre, en réponse à la détection d'une pluralité de paquets optiques consécutifs acheminés sur un canal de longueur d'onde ayant une amplitude d'échantillon inférieure à la valeur de puissance critique, l'envoi d'un message OAM à un contrôleur du réseau.

8. Dispositif de surveillance d'un noeud optique d'un réseau synchrone, comprenant :
- une première entrée (8) pouvant être connectée à une fibre optique pour recevoir un signal WDM comprenant une pluralité de signaux optiques d'entrée, chaque signal optique d'entrée incluant une pluralité de paquets optiques séquencés dans le temps acheminés sur un canal de longueur d'onde, chaque paquet optique débutant par une étiquette de paquet codée dans le signal optique d'entrée,
- une deuxième entrée (9) pouvant être connectée à la fibre pour recevoir le signal optique WDM, la deuxième entrée comprenant une boucle de retard de fibre (13) adaptée pour retarder le signal WDM d'un créneau temporel par rapport au signal WDM reçu sur la première entrée,
- un premier démultiplexeur de longueur d'onde (14) connecté à la première entrée et disposant d'une pluralité de premières sorties,
- un deuxième démultiplexeur de longueur d'onde (14) connecté à la deuxième entrée et disposant d'une pluralité de deuxièmes sorties,
le dispositif de surveillance comprenant en outre, connecté respectivement à la pluralité de sorties de chaque démultiplexeur de longueur d'onde,
- un module décodeur optique (15) adapté pour générer une impulsion de détection électronique (28, 38) en réponse à la détection d'une étiquette de paquet,
le dispositif de surveillance comprenant en outre :
- une porte ET (18) adaptée pour recevoir une première et une deuxième impulsions de détection électroniques (28, 38) acheminées sur le même canal de longueur d'onde depuis la première entrée et depuis la deuxième entrée, la porte ET étant adaptée pour générer pour chaque canal de longueur d'onde une impulsion de synchronisation représentant un chevauchement temporel entre la première impulsion de détection électronique et la deuxième impulsion de détection électronique provenant de la deuxième entrée,
- une horloge (20) destinée à générer un signal de déclenchement de référence (71) dont la période est égale à un créneau temporel,
- un module de mesure (19) destiné à mesurer un retard moyen de longueur d'onde entre les impulsions de synchronisation obtenues pour chacun des canaux de longueur d'onde,
- un déphaseur (22) destiné à générer un signal de déclenchement synchronisé (39) par décalage de phase du signal de déclenchement de référence (71) en fonction du retard moyen de longueur d'onde,
- un détecteur de retard de paquet critique (40) disposant d'une pluralité d'entrées connectées aux sorties des modules décodeurs optiques connectés aux sorties du premier démultiplexeur de longueur d'onde pour recevoir les impulsions de détection électroniques (28), le détecteur de retard de paquet critique comprenant un module de détermination de retard (42) adapté pour comparer pour chaque canal de longueur d'onde le signal de déclenchement synchronisé (39) à l'impulsion de détection électronique (28) afin de déterminer un écart de retard de paquet entre le signal de déclenchement synchronisé représentant un temps de départ moyen (38) et l'impulsion de détection électronique représentant le temps de départ (74) d'un paquet optique du premier signal optique.

9. Dispositif de surveillance selon la revendication 8, dans lequel le détecteur de retard de paquet critique comprend en outre pour chaque canal de longueur d'onde :
- un comparateur (45) adapté pour comparer l'écart de retard de paquet entre le signal de déclenchement synchronisé (39) et l'impulsion de détection électronique (28) à un temps de retard critique,
- un module de traitement (46) adapté pour envoyer un message de retard de paquet critique à un module contrôleur du noeud optique.

10. Dispositif de surveillance selon l'une quelconque des revendications 8 ou 9, comprenant en outre un détecteur de puissance de paquet critique (47) connecté à une sortie du premier démultiplexeur de longueur d'onde, le détecteur de puissance de paquet critique comprenant pour le canal de longueur d'onde correspondant :
- une photodiode à faible bande passante (49) adaptée pour générer une impulsion électronique correspondant à une enveloppe du signal optique d'entrée à la longueur d'onde correspondante,
- un échantillonneur (50) adapté pour extraire un échantillon de l'impulsion électronique à un instant correspondant à la moitié d'un créneau temporel démarrant à partir du signal de déclenchement synchronisé,
- un comparateur (51) adapté pour comparer l'amplitude de l'échantillon à une valeur de puissance critique,
- un module de traitement (52) adapté pour envoyer un message OAM à un module contrôleur du noeud optique en réponse à la détection d'une amplitude d'échantillon inférieure à la valeur de puissance critique.

11. Dispositif de surveillance selon la revendication 10, dans lequel le détecteur de puissance de paquet critique comprend en outre un convertisseur analogique-numérique adapté pour convertir le signal optique d'entrée en un signal numérique.
